# EUROPEAN PATENT SPECIFICATION

(11) **EP 0 691 072 B1**
(45) Date of publication and mention of the grant of the patent: **13.08.1997**
(21) Application number: 95610035.8
(22) Date of filing: 16.06.1995
(51) Int. Cl.: A01G 1/04

(54) **A method for cultivation of edible fungi**
Ein Verfahren zum Kultivieren von essbaren Pilzen
Une méthode pour cultiver des champignons comestibles

(30) Priority: 08.07.1994 DK 824/94
(43) Date of publication of application: 10.01.1996
(73) Proprietor: MATHIESEN, Niels Lang, 2850 Naerum (DK)
(72) Inventor: MATHIESEN, Niels Lang, 2850 Naerum (DK)
(74) Representative: Schoenning, Soeren

(56) References cited:
- WO-A-91/16281
- GB-A- 2 142 326
- US-A- 3 560 190
- US-A- 3 942 969

## Description

The present invention relates to a method for cultivation of edible fungi in a substratum formed by composting and/or heat treatment of vegetal parts, manure from domestic animals, chalk and gypsum, and possible addition of material containing carbon hydrate, protein and fat, to which substratum furthermore energizing substances in form of a vegetal or animal fat or oil absorbed on a porous material are added.

Such a method is known from WO-A-9116281.

When growing edible fungi, in particular mushrooms (Agaricus, in particular A. camprestris), a compost is made which most often consists of a mixture of straw, manure from domestic animals, chalk, gypsum and possibly with an addition of material containg carbon hydrate, protein and/or fat. This mixture is composted, and during the composting microorganisms transform the mixture by development of heat and release of ammonia and carbon dioxide. The development of heat is due to a microbial decomposition of part of the easily decomposable organic substances of the substratum.

The composting usually takes place in compost heaps which are turned by a machine constructed for that purpose.

The released ammonia is partly bound to the various components of the compost and increases - in particular in respect of the plant parts - their digestibility for fungi mycelia. For instance up to some percentages of NH₃ are bound to ligno cellulose material by this treatment, and the nitrogen containing material is utilized by fungi mycelia.

The composting finishes with a heat treatment which pasteurizes the compost.

The criterion for judging whether the composting and the heat treatment are completed is when the temperature has reached 65-67°C, and when ammonia is no longer released. The composting and the ammonia release is important, because free ammonia is toxic to the mushroom mycelia. When it has been ascertained with certainty that this condition has been reached, the substratum is cooled to the running temperature, 20 - 30°C, and is spawned with mycelium. After spawning the substratum is left to a so-called running, i.e. mycelium growth, either in the final cultivation trays, so-called cropping trays, or to a so-called mass running in a big tray provided with equipment for blowing air through the compost, which partly ensures that the heat created by the running is removed, and the temperature is controlled to the desired (optimum) level, and partly also removes carbon dioxide formed. After the running the compost spawned with mycelium is turned over and is filled into the final growth trays and is spread with a special top layer which is necessary for fructuation, i.e. for the formation of the fruit bodies, which are the product to be sold.

With a view to increasing the yield of a given amount of compost it is known to add nutrients to the substratum. Addition of material containing carbon hydrate, protein and/or fat may take place prior to or at turnings during the composting, in connection with the placing in the pasteurizing chamber, at the spawning of the substratum with mycelium and in case of mass running at the mixing of the fully run substratum and the packing in the cropping trays.

By adding the nutrients prior to or during the composting they take part in the microbial process and give partly extra development of heat and partly further biomass for the nutrition of the fungi during the subsequent growth. The additional heat development may be advantageous by promoting the finishing of the fermentation of the compost and may consequently reduce time consumption and the volume of the compost plant, which may often be economically advantageous and which also on account of the reduced period of composting give less loss of substance.

By adding nutrients after the composting, the so-called compost supplementing, they will to a higher extent be of direct use for the growth of the mycilium, but they will on the other hand entail a risk of infection by alien organisms, and the risk of damaging temperature rises on account of continued composting.

When the nutrient compositions are added simultaneously with the spawning with mycelium, they and the remaining microflora will compete about the nutritional supplement, and the control of the temperature therefore has to be most meticulous to ensure that the temperature rise caused by the microflora will not become to big.

If the nutrients are added after the mass running, i.e. at a time, where the mushroom mycelium dominates the other microflora, the maximum effect of these nutrients is from the mushroom grower's point of view achieved. The risk of an infection, however, still exists. This form of addition is called supplementing at casing.

The competition in respect of the added nutrients between microflora and the desired mushroom mycelium may be turned to the advantage of the mushroom mycelium if the nutrient composition is partially protected against quick decomposition of the microorganisms, in particular bacteria, through chemical or physical treatment. Thus, for instance soya bean protein, which is sometimes used for increasing the yield of cultivated mushrooms, can be partially protected by treatment with formalin. Fat and fatty oils, protein and fatty substances and fatty acid triglycerides may be protected by absorption in a porous material or encapsulated in formalin-treated protein. Such a product is commercially available under the name of Millichamp 3000 and Millichamp 6000 with 0.3 and 6.0% formalin, respectively. Besides, it is known that addition of soya bean meal increases the yield in mushroom cultivation, and that the increased yield i.a. is due to the content of the soya bean of linoleic acid which is an important fatty acid for mushrooms; the same applies to other fungi and to many bacteria.

Supplement of compost is disclosed in US Patent no 3,560,190 from December 1968. In the patent a process for the manufacture of an easily mixable, friable nutrient supplement for mass-run compost by casing, said supplement comprising cottonseed meal and cottonseed oil, and in which the oil is adsorbed in advance on Fuller's earth or sawdust or on a mixture of both. The purpose of mixing the oil with the dried clay or the sawdust is exclusively to produce a friable protein-containing product which makes an easy and homogenous admixing of the supplement into the mass-run compost possible. To ensure an easy visual control of the admixture, a granule size of the dried clay and the sawdust of 1-8 mm is prefered.

In the publication it is further said that the supplement with a protein containing product provides the mycelium witht an additional supply of protein, whereas the effect of the oil is said not to be known, but it is supposed that the apparent beneficial effect might be due to unknown factors of growth in very small amounts in the oil in form of hormones.

The yield increases referred to in the patent of 30 - 50% by supplementing show that the used standard compost has been particularly poor.

Dedicated supplement products are available on the market, which products may be added to the substratum prior to or after the running and which give an increased yield. The yield increase is, however, with an optimated compost only of the size of approx. 10%, and these supplement products are comparatively costly among others due to the fact that they must not contain spores or microorganisms which may infect the substratum. However, the use of supplement products is widespread, because they contribute to a better exploitation of the cultivation facilities at the mushroom growers.

On this background it is the object of the invention to provide a supplement product which has a similar efficiency as the dedicated products, but which is substantially more economical in use.

It has now surprisingly turned out in accordance with the invention that spent bleaching earth has particularly good properties as a supplement to the growth substratum of edible fungi. According to the invention the process is therefore characteristic by the subject matter of independent claim 1 and independent claims.

Bleaching earth is the term for acid-activated, dried bentonite powder which is used for instance for decolorization of animal, vegetable and fish oils.

In connection with the decolorization of the oils a residue product is produced, said product being called spent bleaching earth. It has a content of 20-50% oil products absorbed in the clay. It is normally deposited in refuge dumps, because it is not lucrative to recover the fat content. In Denmark the production of spent bleaching earth amounts to approx. 1000 t per year; in the big industrial countries the production may be very big, for instance in Hamburg amounting to 15000 t per year.

The spent bleaching earth deriving from decolorization of raw oils has properties which make it particularly suited for ammonia-binding and nutritional supplement to compost for cultivation of edible fungi, which will be explained later in the description.

The modern bleaching earth is acid-activated bentonites, and the spent bleaching earth contains the substances removed by the bleaching: colour components, for instance, carotins, hydrophilic sulpfur lipides, fatty acids, tocopheroles and cholesteroles. Moreover, a big content of the fat treated itself will, of course, be present.

The acid-activated bentonite is loaded with hydrogen ions by a leaching with either hydrochloric acid or sulphuric acid, depending on whether in respect of the utilized geological depositing it is needed to wash out both sodium and calcium or whether simply a washing out of sodium will do. Modern bleaching earth has in this way been developed to possess maximum binding ability for polar substances, which are those groups of substances that are primarily desirable to remove from salad oils. The actual object is to be able to carry through the bleaching with use of as little bleaching earth as possible, because bleaching earth is expensive both in respect of buying, discarding and loss of oil.

In addition to the advantageous effect from the oil residues as a nutrient supplement for the compost a number of advantages are obtained due to the bentonite used at the bleaching. Hydrogen-lodaded bentonite adds ammonia direct from the gas phase and is therefore transformed into ammonia bentonite which has a water-binding ability (swelling ability) in line with sodium bentonite. Hydrogen bentonite, therefore, retains ammoina in a bound, non-toxic form, which is still accessible for the mycelium. This has three decisive advantages when used in mushroom compost. It prevents ammonia toxication during running, it increases the nitrogen content of the compost, and it reduces ammonia contamination during the composting.

This ammonia-adding property in acid-activated, hydrogen-loaded bentonite differs from the ion-exchange-based ammonia-binding which takes place in clay soil by substituting in particular alkali metals by ammonia ions. This ion-exchange does not take place during composting with spent bleaching earth, because the clay is fatty and because there is no liquid aqueous phase present.

Ammonia binding to the fatty acids also takes place as a pure addition of ammonia to the fatty acid and it may again take place with ammonia from the gaseous phase.

In the compost the ammonia is present dissolved in the aqueous phase and in equilibrium therewith in the gasesous phase. The ammonia is present as ammonia carbonate and -bicarbonate, where also the carbonate "ion" stems from the biological decomposition of the organic substance in the compost.

As the fatty substances in the bleaching earth is decomposed the bentonite becomes water-binding like normal swelling clay. Supply of clay material to the growth medium (the compost) to fungi growing in earth makes the growth medium more "natural" for the fungus. The clay material is water-binding and ion-exchanging and may reduce possible salt inhibition in starting materials, such as for instance manure from domestic animals. In particular the water-binding capacity of the compost is important in the growth phase.

The polar fatty substances, which the bleaching earth has extracted from the bleached oils, are partly physiologically active substances from mushroom mycelia and partly substances which bind ammonia. Unsaturated fatty substances, in particular linol and linolenic acid are known to be growth promotors for fungi mycelia. Whether carotins and tocopheroles are growth promotors for fungi mycelia are not known, but it is obvious to draw parallels to rumen fermentation in ruminants, where in particular these types of substances have a specific rumen-activating effect.

The polar fatty substances, in particular sulphur lipides, which are contained in the bleaching earth, is particularly active in this connection for the following reasons:
1. Mycelia and the mushroom fruit bodies contain a big part of these fat types in their mycelia and fruit bodies. Addition of such types of fat to the growth substratum may therefore be assumed to ensure the supply to the mycelium of these types of substances.
2. In respect of the mycelia the lecithines are part of the wall membranes, through which the extra-cellular metabolism with the growth medium takes place.
3. Fatty substances, to which polar lipides are admixed, easily absorb water - they are hydrophilized - and this enchances the digestion by the mycelium of the fatty substances. The digestion takes place by means of enzymes which are active in an aqueous environment.
4. The content of free fatty acids is also particularly advantageous. The free fatty acids absorb ammonia from the growth medium and consequently enhance the binding ability of the ammonia of the spent bleaching earth with the same advantages as described above in respect of the acid-activated bentonite. The ammonia soap formed contributes to hydrophilizing the fat content and consequently the accessibility of the fat for the microorganisms.

Spent bleaching earth from salad oil and from the fat producing industries may be divided into two main groups:
1. Spent bleaching earth from pre-refining of raw oils prior to hardening processes.
2. Spent bleaching earth from final refining of hardened oils.

Type 1 is in particular characterized by the described big content of physiologically active, growth-promoting substances.

Bleaching earth 2 contains exclusively fat and oil residue which are identical with the hardened oil.

It has in particular turned out that especially the spent bleaching earth from bleaching of crude vegetal oils is an excellent supplement product for mushroom cultivation, and it is therefore possible to utilize these waste products in a very lucrative way.

The utilization of the fatty substances absorbed on spent bleaching earth is not impeded by the fact that the degree of rancidification of the fatty substances is so high that the spent bleaching earth is unsuitable as forage for animals. The rancidification processes are catalyzed by bentonite and also promoted by the big surface area of the product with subsequent oxygen supply. Oxidation of unsaturated fatty substances takes place through peroxide compounds and further on to polymerisates which are known from linseed-oil-based enamels and paints. In forage for animals the peroxide compounds are toxic, and the analysis methods within forage measure peroxide figures and total oxidation figures, and both figures are used as quality criteria. Luckily, bentonite apparently catalyzes the polymerization processes better than the formation of peroxide, and that is the reason why the rancid fatty substance used on bleaching earth does not make any damage, not even in forage for animals.

When it is a question of cultivation of mushrooms there are neither formal nor real scruples about rancidification of hardened fatty substances, and it is even very likely that the hardenend fatty substances at all stages are a good source of energy for the microflora.

The use may in accordance with the invention take place in several of the following ways, in which the properties of the bleaching earth as an energy source, as an ammonia absorbing substance and as a concentrated source for growth promoting substances are utilized to a varying degree, and in which furthermore the various growth conditions within the production of compost and supplementing thereof may be taken into account.

The typical processes and the particular advantages attached thereto will be described in detail by way of examples in the following:

Spent bleaching earth of any type added at the start or in connection with the turning of the compost trays gives an energy supply with quick temperature rises and a subsequent quick and scheduled composting. Moreover, this time of addition utilizes the ammonia binding ability of the products for optimum storing of raw protein (ammonia).

The major component of the growth substrata is normally straw, and straw in particular varies considerably in respect of easily transformable carbon hydrate dependent on whether it has had any rain during the harvesting or not. Well harvested straw contains 25% easily transformable saccharines or penthosanes, whereas straw which has been thoroughly wet by rain hardly contains any easily transformable saccharines, which may be nutritious for the composting.

The same varying content of easily transformable energy is a problem in respect of manure from domestic animals.

A cheap and easy-to-handle compost supplement which is ammonia-binding and consequently "self-regulating" in respect of nitrogen content is therefore a very useful product to have at disposal for controlling the composting process.

2 - 3% spent bleaching earth may be added per turning over. The limitation as to amount added lies on the structural side, as the growth media should not become too compact for the carbon dioxide to be vented away and too difficult for oxygen to permeate into the mycelium.

The biomass in form of bacteria and in particular fungi mass, which is built up on basis of the nutritional content, and the quick composting and saturation of the compost attained, will later be to the benefit of the mushroom mycelium in form of a more energy-containing compost.

The addition and the subsequent participation in the transformation processes taking place during the composting is the safest way of addition, and considering that spent bleaching earth is a very cheap product, which may very well be used in abundance, this is the preferred method.

If the main components available for composting are sufficiently rich on energy, and there is not particular need for neither energy supplement or ammonia-binding, addition immediately prior to the pasteurizing phase will be preferable.

The spent bleaching earth will then participate in the pasteurizing which prevents the risk of infection, and at the same time the ammonia-binding properties of the bleaching earth will cause the compost to be quickly relieved of ammonia, which is the criteria as to whether the pasteurizing - if the minimum demand for time at 65 - 67°C is met - has been finished or not.

No decomposition of any significance as to composting of the organic content of the spent bleaching earth will take place, as the bleaching earth takes part in the pasteurizing phase, and the energy content will therefore be available for the mushroom mycelium in the running period.

It is an advantage to have used bleaching earth embedded in the compost in the running phase, said soil being easily accessible and a substrate rich on energy for the mycelium, because this is the phase, in which the energy and substance reserves, which later, during the formation of the pileus are to become to pileus bodies, are stored in the mycelium.

Moreover, it gives security to have an ammonia-absorbing substance participating in this phase, and besides the controlling of the temperature becomes much safer, in particular at mass running.

If there is in particular a need for optimum utilization of the spent bleaching earth for cultivation of mushrooms, this time of addition is the preferred one.

The addition of supplementary products, for instance those special products available on the market, is normally recommended to take place at the spawning or after mass running in connection with the last turn over and casing of the compost run through. This is an actual supplementing which gives the highest yield per added unit of the supplement product, which is also absolutely necessary for making supplementing with expensive special products profitable.

Even though the mycelium is highly antagonistic towards an alien infection after "through-running", there is still a great risk of infection, for instance mould infection and a subsequent great probability of a larva infection when supplementing with non-sterile "bulk goods", which is exactly what spent bleaching earth is, according to its creation as a not particularly carefully handled residual product.

Supplementing with spent bleaching earth at the time of casing has however been carried through testwise with a particularly good result (Test 2), but there are also test results, where the process has lead to reduced yield on account of infection (Test 3). The most likely reason of infection is mould infection from bigger lumps of bleaching earth, which are given the opportunity of developing before the mycelium "conquers" the material.

Orientating tests with supplement of 1, 2, and 4% by weight of bleaching earth to fully run compost means that the optimated supplementary level for fully run compost is 1-2%, 4% supplementing having given lack of sterility and reduced yield on account of mould and mite attack.

### Test 1

### Temperature rising effect and ammonia-binding

By stack composting, 1% spent bleaching earth (solid basis) is added to the outlets, i.e. the ends of the stack, at each turning.

At all three turnings the temperature rise in the otherwise slower end portions is quicker than in the stack as a whole.

The binding ability of the ammonia is demonstrated by putting a nylon bag with spent bleaching earth on top of the compost during the tunnel pasteurization.

This treatment binds 2-2.5% by weight ammonia in the bleaching earth, which is at the same time quelling.

### Test 2

### Supplementing by spawning or after mass running

Comparison of soya, bleaching earth and Millichamp 6000 and 3000 in 1% supplement. Tests with normal and mass-run compost ± supplement.

Registration of solid matter yield (SMY) by varying supplements:

| | Normal run: | | | Mass run | | |
|---|---|---|---|---|---|---|
| | Suppl. at spawning | | | Suppl. at mixing | | |
| | kg/m2 | g/piece | SMY% | kg/m2 | g/piece | SMY% |
| 1. supplm. | 36.05 | 10.4 | 110.3 | 33.15 | 10.7 | 100.8 |
| 2. + extracted soya | 33,42 | 10.7 | 102.3 | 37.83 | 11.2 | 108.2 |
| 3. + 1% bleaching earth | 33.42 | 10.6 | 108.9 | 37.67 | 11.4 | 107.8 |
| 4. + 1% Millichamp 6000-3000 | 36.15 | 10.8 | 110.6 | 36.93 | 11.0 | 105.5 |

The negative effect or lack of positive effect in the test with supplementing of the standard compost by spawning may implicate damage by heat in respect of the soya supplement. Millichamp 6000 is neutral.

The positive effect is marked when supplementing before the turning after the mass-running.

The test demonatrates that bleaching earth as supplement is just as good as soya, and that with both these products as a whole better results have been achieved than with the expensive special product Millichamp 3000.

### Test 3

### Examination of the penetration of the mycelium into bleaching earth

Bags of nylon web with portions of 5 g of spent rape bleaching earth were embedded in the mushroom compost at the time of spawning.

The object is to study the penetration of the mycelium into the clean bleaching earth.

During the cultivation mite infection occurs as a consequence of mould formation.

At the taking out of the nylon bags, the major amount of bleaching earth is heavily mould-infected, and the mushroom mycelium has only penetrated into the bleaching earth in a few areas.

The test shows that there is a risk of infection from lumps of bleaching earth.

### Test 4

### 3 different types of compost, supplementing at spawning with 1% soya or 1% spent rape bleaching earth. The test shows the following:

1. The standard compost gives a positive effect by supplementing with extracted soya in an amount of + 3.2%, and by supplementing with spent bleaching earth in an amount of + 8.9%.
2. The standard compost and liquid manure from livestock: A positive swing is attained on the liquid manure and on both extracted soya of +4.3% and on spent bleaching earth of + 9.6%.
3. Standard compost and urea and gypsum: A positive swing is attained by supplementing with both extracted soya of +12.6% and with spent bleaching earth of +6.6%.

The high positive swing with extracted soya supplementing seems to indicate a defiency of raw protein in the compost and perhaps that the gypsum/urea combination is not so effective for ammonia binding as ammonia sulphate/forage chalk, which is used in the standard compost.

The main conclusion is that spent bleaching earth is better or at least just as good a supplement for addition during spawning as soya grits. The fat content of the spent bleaching earth adds energy and in some cases also a supply of particularly valuable substances, such as linoleic acid, linolenic acid, lecithines, tocepheroles, etc.

The description of the use of spent bleaching earth as nutrient in the cultivation of fungi concentrates on the cultivation of mushrooms which are the most widely grown edible fungus in the western world. The methods for growing other soil-growing fungi remind very much about the cultivation of mushrooms, and it is therefore to be expected that similar good results may be attained in the cultivation of other types of fungi.

The heat treatment of the substratum at the composting has in respect of some cultivated fungi types been replaced by a pure heat treatment with heat supplied from outside, for instance in form af vapour supply. Also in respect of substrata for mushrooms, recipes may be found for "synthetic" mushroom composts, where the composting has been replaced by a direct heat treatment.

In respect of fungi growing in trees it is known that supply of fats, in particular linoleic acid, increases yields. By use of spent bleaching earth for, for instance oyster mushroom (Pleurotus), which is cultivated on upwatered pasteurized straw, it is advantageous to add the spent bleaching earth prior to the heat treatment. Moreover, 1.5 - 2% ammonia nitrogen, counted on bleaching earth basis, is to be added. It corresponds to the amount of ammonia which the bleaching earth would absorb in a composting process with formation of ammonia.

## Claims

1. A method for cultivation of edible fungi in a substratum formed by composting and/or heat treatment of plant parts, manure from domestic animals, chalk and gypsum, and with possible addition of material containing carbon hydrate, protein and fat, to which substrate energizing and ammonia binding substances in form of a fatty acidic oil absorbed on a clay material is added,
**characterized** in that the clay material is an acid-activated bentonite containing oil residues from decolorization of animal, vegetal and fish oils.

2. A method according to claim 1,
**characterized** in that the oil containing bentonite is added at such a time that it is present during at least part of the composting or the heating-up.

3. A method according to claims 1 or 2,
**characterized** in that at turnings of the compost 3% spent bleaching earth is added to the substrate as nutrient.

4. A method according to claims 1, 2 or 3,
**characterized** in that at least part of the oil containing bentonite is added after the composting.

5. Use of acid-activated bentonite-containing oil residues used for decolorization of animal, vegetal and fish oils, as energizers, growth stimulating substances and as ammonia binding agent in a substratum for the cultivation of edible fungi.

## Patentansprüche

1. Verfahren zum Anbau von Speisepilzen in einem durch Kompostierung und/oder Hitzeeinwirkung von Pflanzteilen, Haustiermist, Kalk und Gips gebildeten Substrat, und mit eventueller Zugabe von kohlenhydrat-, protein- und fetthaltigem Material, welchem Substrat energiegebende und ammoniakbindende Stoffe in Form von einem auf einem Lehmmaterial absorbierten, fettsäurehaltigen Öl beigegeben werden, dadurch **gekennzeichnet**, daß das Lehmmaterial ein säureaktivierter Bentonit ist, der von Entfärbung von animalischen, vegetabilischen und marinen Ölen stammende Ölreste enthält.

2. Verfahren nach Anspruch 1, dadurch **gekennzeichnet**, daß der ölhaltige Bentonit zu einem solchen Zeitpunkt beigegeben wird, dass er während mindestens eines Teils der Kompostierung oder die Hitzeeinwirkung anwesend ist.

3. Verfahren nach Anspruch 1 oder 2, dadurch **gekennzeichnet**, daß dem Substrat durch Umstechungen während der Kompostierung bis auf 3% gebrauchte Bleicherde als energiegebender Zusatzstoff beigegeben wird.

4. Verfahren nach Anspruch 1, 2 oder 3, dadurch **gekennzeichnet**, daß mindestens ein Teil des ölhaltigen Bentonits nach der Kompostierung beigegeben wird.

5. Verwendung von säureaktivierten, bentonithaltigen Ölresten, die zur Entfärbung von animalischen, vegetabilischen und marinen Ölen verwendet gewesen sind, als energiegebende, wachstumsfördernde Stoffe und als Ammoniakbindemittel in einem Substrat zum Anbau von Speisepilzen.

## Revendications

1. Méthode pour cultiver des champignons comestibles dans un substrat fait par compostage et/ou traitement thermique de parties de plante, d'engrais des animaux domestiques, de chaux et de gypse, et avec l'addition éventuelle de matière contenant de l'hydrate de carbone, de la protéine et de la graisse, substrat qui est additionné de substances énergisantes et liant d'ammoniac en forme d'une huile gras à teneur d'acide absorbée sur une matière argileuse, **caractérisée** en ce que la matière argileuse est une bentonite activée par acide et contenant des résidus d'huile depuis la décoloration d'huiles animales, végétales et de poisson.

2. Méthode selon la revendication 1, **caractérisée** en ce que la bentonite huileuse est additionnée à un tel moment qu'elle est présente lors d'au moins une partie du compostage ou du traitement thermique.

3. Méthode selon les revendications 1 ou 2, **caractérisée** en ce qu'en recoupant lors du compostage, jusqu'à 3% de terre à blanchir utilisée est additionnée au substrat comme substance nutritive.

4. Méthode selon les revendications 1, 2 ou 3, **caractérisée** en ce qu'au moins une partie de l'huile contenant de bentonite est additionnée après le compostage.

5. Usage de résidus d'huile activée par acide, contenant de bentonite et utilisée pour la décoloration d'huiles animales, végétales et de poisson comme des apports d'énergie, des substances de croissance et comme un liant d'ammoniac dans un substrat pour cultiver des champignons comestibles.
